# EUROPÄISCHE PATENTANMELDUNG

(11) **EP 4 431 821 A1**
(43) Veröffentlichungstag der Anmeldung: **18.09.2024**
(21) Anmeldenummer: 24159585.9
(22) Anmeldetag: 26.02.2024
(51) Int. Cl.: F24D 13/02, B32B 5/18, E04F 15/00, H05B 3/26

(54) **BEHEIZBARER FUSSBODENBELAG**

(30) Priorität: 16.03.2023 DE 102023202413
(71) Anmelder: Benecke-Kaliko AG, 30419 Hannover (DE)
(72) Erfinder: Nassauer, Benjamin, 30419 Hannover (DE)
(74) Vertreter: Continental Corporation

(57) **Zusammenfassung**

Die Erfindung betrifft einen Fußbodenbelag, vorzugsweise eine Trittschalldämmung, aufweisend eine Verbundstruktur (1) mit wenigstens einer elektrisch heizbaren Lage (3) und eine Unterschicht (9) mit einem Polymerschaum. Die Verbundstruktur (1) ist mit einer Einrichtung zur Regelung der Temperatur der elektrisch heizbaren Lage (3) verbindbar.

## Beschreibung

Die Erfindung betrifft einen Fußbodenbelag, vorzugsweise eine Trittschalldämmung, aufweisend eine Verbundstruktur mit wenigstens einer elektrisch heizbaren Lage und eine Unterschicht mit einem Polymerschaum.

Bekannte Fußbodenaufbauten umfassen einen Untergrund, welcher üblicher Weise aus Beton besteht. Als sichtbare Oberfläche, welche gleichzeitig die Aufgabe einer Nutzschicht übernimmt, wird auf den Untergrund ein Fußbodenbelag, beispielsweise in Form von Laminat, Parkett oder Fliesen verlegt. Zur thermischen Isolierung der Oberfläche bzw. der Nutzschicht von dem Untergrund und bzw. oder zur akustischen Dämmung ist zwischen dem Fußbodenbelag und dem Untergrund eine sogenannte Trittschalldämmung aus einem geschäumten Polymer vorgesehen. Wenn der Fußbodenaufbau eine Fußbodenheizung umfasst, wird zwischen der Trittschalldämmung und der Nutzschicht eine zusätzliche heizbare Schicht angeordnet. Diese heizbare Schicht kann mäanderformig verlaufende Drähte oder mit z. B. warmem Wasser durchströmte Fluidleitungen aufweisen. Alternativ sind auch Lösungen bekannt, bei der die heizbare Schicht als eine dünne Folienschicht ausgebildet ist, die elektrisch leitfähige Strukturen aufweist und bei Durchfluss von elektrischem Strom als Widerstandsheizelement ausgebildet ist.

Die DE 20 2017 005 268 U1 betrifft eine heizbare Trittschalldämmung, wobei eine bekannte Trittschalldämmung mit einer Heizfunktion erweitert wird. Die Heizfunktion wird durch eine streifenweise oder vollflächig mit einer elektrisch leitfähigen Tinte bedruckten Folie bereitgestellt, die gemeinsam mit einem Vlies eine Verbundstruktur bildet.

Nachteiliger Weise kann eine Regelung der Temperatur des Fußbodenbelags nur auf Basis eines subjektiven Empfindens einer Person erfolgen. Insbesondere während Phasen der Temperaturänderung, insbesondere beim Aufheizen, kann es aufgrund einer zeitverzögerten Reaktion zu einem Überschreiten einer subjektiv angenehm wahrgenommenen Zieltemperatur kommen. Hierdurch kann die Temperatur der beheizten Oberfläche unangenehm hoch werden und es kann schlimmstenfalls bei Berührung sogar zu Verbrennungen kommen. Manche Bodenbeläge wie z.B. Vinylböden sind besonders empfindlich hinsichtlich zu hoher Temperaturen. In diesem Fall ist es besonders wichtig, die maximal zulässigen Temperaturen nicht zu überschreiten, um eine Beschädigung des Bodenbelags zu verhindern.

Der Erfindung liegt die Aufgabe zugrunde, einen beheizbaren Fußbodenbelag, vorzugsweise eine Trittschalldämmung bereitzustellen, mit welcher die bestehenden Probleme einer Überschreitung der Zieltemperatur vermieden werden können. Zusätzlich oder alternativ soll das Erreichen der Zieltemperatur präzise geregelt werden können. Zusätzlich oder alternativ soll die Herstellung der Verbundstruktur möglichst kostengünstig erfolgen.

Die Lösung dieser Aufgabe ergibt sich durch einen Fußbodenbelag mit den Merkmalen des unabhängigen Anspruchs 1. Weitere vorteilhafte Ausbildungen sind in den abhängigen Ansprüchen offenbart. Weitere Vorteile und Merkmale sind der allgemeinen Beschreibung sowie den Ausführungsbeispielen zu entnehmen.

Die vorliegende Anmeldung betrifft einen Fußbodenbelag, vorzugsweise eine Trittschalldämmung, aufweisend eine Verbundstruktur mit wenigstens einer elektrisch heizbaren Lage. Die Verbundstruktur weist weiterhin eine Unterschicht mit einem Polymerschaum auf. Die Verbundstruktur ist mit einer Einrichtung zur Regelung der Temperatur der elektrisch heizbaren Lage verbindbar.

Die Unterschicht kann mit einer elektrisch leitfähigen Schicht als elektrisch heizbare Lage beschichtet sein. Die elektrisch heizbare Lage ist vorzugsweise aus einem Material mit einem temperaturabhängigen Widerstand ausgebildet, wobei ein elektrischer Strom bei tiefen Temperaturen besser als bei hohen Temperaturen geleitet werden kann. So genannte PTC-Widerstände (positive temperature coefficient) bieten den Vorteil, dass die maximale Temperatur der elektrisch heizbaren Lage durch den Widerstand begrenzt werden kann. Das ist insbesondere dann der Fall, wenn der Widerstand im Bereich der maximal zulässigen Temperatur stark ansteigt. Ein Überhitzen der Verbundstruktur bzw. des Fußbodenbelags kann auf diese Weise wirksam vermieden werden. So kann die elektrisch heizbare Lage zum Beispiel aus einem Polymer mit leitfähigen Additiven wie z.B. Carbon gebildet sein.

Die Verbundstruktur ist mit einer Einrichtung zur Regelung der Temperatur der elektrisch heizbaren Lage verbindbar, wodurch auf besonders vorteilhafte Weise ein Überhitzen der Verbundstruktur bzw. des Fußbodenbelags vermieden werden kann. Zusätzlich oder alternativ kann die Raumtemperatur an sich präzise geregelt werden. Hierzu kann die Einrichtung zur Regelung der Temperatur mit einem Temperatursensor verbunden sein, der Informationen über die Raumtemperatur und bzw. oder über die Temperatur der Verbundstruktur bzw. des Fußbodenbelags liefern kann. Der Temperatursensor kann demnach Bestandteil des Fußbodenbelags bzw. der Verbundstruktur sein, aber auch in Form eines Temperatursensors außerhalb des Fußbodenbelags zur Messung der Raumtemperatur vorliegen.

Die Einrichtung zur Regelung der Temperatur kann innerhalb oder außerhalb der Verbundstruktur bzw. des Fußbodenbelags angeordnet sein.

Die Verbundstruktur kann des Weiteren hochleitfähige streifenförmige Elektroden aufweisen, welche den Strom in die heizbare Lage leiten. Diese Elektroden können z. B. aus flexiblen Kupferstreifen gebildet sein, welche auf einer Raumseite durch eine Kontaktierung mit der Einrichtung zur Regelung der Temperatur, z. B. einem Steuergerät, verbunden sein können. Vorzugsweise kann diese Kontaktierung in einem Bereich unter oder innerhalb einer Fußleiste angeordnet sein.

Die Unterschicht ist als ein Polymerschaum ausgebildet, um den Fußbodenbelag thermisch von dem Untergrund zu isolieren und eine akustische Dämmung bereitzustellen, sodass dem Fußbodenbelag die Funktion einer Trittschalldämmung verliehen werden kann.

Der Polymerschaum kann aus Polyvinylchlorid-, Polyolefin- oder Polyurethanschaum ausgebildet sein. Der Polymerschaum kann zur Herstellung eines Haftverbunds mit einer der elektrisch leitfähigen Schichten gegebenenfalls eine Haftvermittlungsschicht aufweisen. Der Polymerschaum der Unterschicht kann zum Beispiel auf die mindestens erste elektrisch leitfähige Schicht aufkaschiert werden. Jedwede physikalisch-chemischen Eigenschaften der Verbundstruktur lassen sich für den jeweiligen Anwendungszweck so in breiter Weise einstellen.

Die elektrisch heizbare Lage kann in einem weiteren Ausführungsbeispiel als eine gedruckte und aushärtend getrocknete elektrisch leitfähige Struktur ausgebildet sein. Die elektrisch heizbare Lage kann durch flächiges oder teilweises Bedrucken einer Folie mit einer Polymerpaste oder einer Tinte in einem Druckverfahren erzeugt werden. Die Polymerpaste kann mit elektrisch leitfähigen Additiven, zum Beispiel aus Kohlenstoff oder Silber, versetzt werden. So können elektrisch leitfähige Strukturen, z. B. in Form von Leiterbahnen, die besonders dünn, dehnfähig und biegeflexibel sind, in einem Druckverfahren erzeugt werden. Durch Trocknung z.B. in einem Ofen erstarrt das pastöse Material und härtet aus, wodurch eine formstabile Lage oder Struktur erhalten bleibt. Es zeigt sich als vorteilhaft, dass die elektrisch heizbare Lage bzw. die gesamte Verbundstruktur auf diese Weise besonders dünn und flexibel ausgebildet sein kann. Die Pasten können durch geeignete Druckverfahren, wie z.B. Siebdruck, auf ein Substrat aufgebracht werden. Die Schichtstärke der getrockneten Paste sollte vorzugsweise im Bereich 5-30 µm liegen. Die elektrisch heizbare Lage kann sich bei Stromführung aufgrund des elektrischen Widerstands der elektrisch leitfähigen Struktur erwärmen und so die Verbundstruktur bzw. den Fußbodenbelag als ein flächiges Widerstandsheizelement erwärmen. Die gesamte Oberfläche des Fußbodenbelags kann auf diese Weise gleichmäßig beheizt werden. Durch eine flächige Heizung kann die Temperatur der elektrisch heizbaren Lage bei gleicher Heizleistung im Vergleich zu z. B. einzelnen Heizdrähten geringer gehalten werden. So können lokale Temperaturspitzen vermieden und der Komfort gesteigert werden. Als Substrat kann auch die Unterschicht dienen, welche direkt mit dem elektrisch leitfähigen Material bedruckt oder beschichtet werden kann.

Die elektrisch heizbare Lage kann zur Stromversorgung an eine Spannungsquelle angeschlossen werden. Es zeigt sich als besonders vorteilhaft, dass durch Drucken elektrisch leitfähiger Strukturen die hierfür erforderlichen Leiterbahnen bereits innerhalb der Verbundstruktur vorgesehen sein können. Hierdurch kann der Aufwand einer externen Verkabelung der Verbundstruktur verringert werden. Die Leiterbahnen sind stellenweise, insbesondere in den seitlichen Randbereichen der Verbundstruktur frei zugänglich, wodurch die Kontaktstellen mit externen Einrichtungen z. B. mit Steck- oder Crimpverbindungen elektrisch leitend verbunden werden können. Die Kontaktierungsposition kann durch ein entsprechendes Layout der gedruckten Leiterbahnen angepasst und frei gewählt werden. Um den optischen Eindruck des Fußbodenbelags nicht negativ zu beeinflussen, zeigt es sich als besonders vorteilhaft, etwaige Kontaktierungsstellen der Verbundstruktur in den äußeren Randbereichen des Fußbodenbelags vorzusehen, die an einer sich normal zur Ebene des Fußbodens vertikal erstreckenden Wand angrenzen, sodass die Kontaktierungsstellen unterhalb einer Übergangsleiste von dem Fußboden zur Wand optisch verborgen werden können.

Gemäß einem weiteren Aspekt der vorliegenden Erfindung weist die Verbundstruktur wenigstens einen Temperatursensor auf. Der Temperatursensor ist mit einer Einrichtung zur Regelung der Temperatur der elektrisch heizbaren Lage verbindbar, wodurch auf besonders vorteilhafte Weise ein Überhitzen der Verbundstruktur bzw. des Fußbodenbelags vermieden werden kann. Der Temperatursensor kann als klassisches oberflächenmontiertes Sensorelement, auch SMD-Bauteil genannt, auf der gedruckten Leiterbahn der Funktionsschicht angeordnet werden. SMD-Bauteile können typischer Weise über eine Löt- oder Klebeverbindung auf einem Substrat, z. B. einer Leiterplatte, angeordnet werden.

Die elektrisch heizbare Lage und der Temperatursensor können vorzugsweise innerhalb einer Lage angeordnet sein. Mit anderen Worten kann die elektrisch heizbare Lage den Temperatursensor aufweisen, was den Vorteil eines sehr kompakten Aufbaus mit sich bringt.

Gemäß einem weiteren Aspekt der vorliegenden Erfindung weist die Verbundstruktur wenigstens eine Zuleitung der elektrisch heizbaren Lage und bzw. oder eine Zuleitung des Temperatursensors auf. Die Zuleitung kann zum Beispiel aus Streifen einer Kupferfolie gebildet sein. Die Zuleitung dient zur Verbindung der elektrisch heizbaren Lage mit der Spannungsquelle zur Stromversorgung und bzw. oder zur Datenübertragung des Temperatursensors.

Gemäß einem weiteren Aspekt der vorliegenden Erfindung ist die Zuleitung der elektrisch heizbaren Lage und bzw. oder die Zuleitung des Temperatursensors als eine gedruckte und aushärtend getrocknete elektrisch leitfähige Struktur aus mindestens einer elektrisch leitfähigen Paste ausgebildet.

Mit anderen Worten können die Leitungen zur Stromversorgung der elektrisch heizbaren Schicht und bzw. oder zur Datenübertragung des Temperatursensors als gedruckte Leiterbahnen vorliegen. Die Leiterbahnen sind aus der elektrisch leitfähigen Paste gebildet.

Der Temperatursensor kann als oberflächenmontiertes Sensorelement (SMD-Bauteil) auf der gedruckten Leiterbahn der elektrisch heizbaren Schicht angeordnet werden. Der Temperatursensor kann z. B. mit Hilfe eines elektrisch leitfähigen Haftvermittlers mit der Zuleitung des Temperatursensors verbunden sein.

Gemäß einem weiteren Aspekt der vorliegenden Erfindung ist der Temperatursensor als eine gedruckte und aushärtend getrocknete elektrisch leitfähige Struktur ausgebildet. Durch die gleichzeitige Anordnung der elektrisch heizbaren Lage und des Temperatursensors innerhalb einer Lage kann die Anzahl der Komponenten, welche ausschließlich die Funktion des Sensors oder eines Heizelements erfüllen würden, reduziert werden. Die elektrisch leitfähige Struktur des Temperatursensors kann analog zu der elektrisch heizbaren Lage durch eine Polymerpaste mit elektrisch leitfähigen Additiven gedruckt werden. Durch eine Integration mehrerer Funktionen in eine Komponente kann ein Beitrag zu einer kostengünstigen Systemauslegung geleistet werden, der sich insbesondere durch eine vereinfachte Montage aufgrund einer reduzierten Anzahl von zu montierenden Einzelkomponenten erzielen lässt. Zusätzlich kann die Verbundstruktur durch die Integration mehrerer Funktionen und Elemente in einer Lage eine möglichst geringe Schichtdicke aufweisen. So können Bauraum und Gewicht des die Verbundstruktur aufweisenden Fußbodenbelags reduziert werden, was insbesondere bei Anwendungen in so genannten Tiny Houses, Gebäuden, Wohnmobilen, Booten, Zügen oder Flugzeugen von großer Bedeutung ist, bei welchen, aufgrund des ohnehin gering zur Verfügung stehenden Bauraums, jegliches Einsparpotenzial einen positiven Beitrag der nutzbaren Fläche bzw. des Raumvolumens liefert.

Gemäß einem weiteren Aspekt der vorliegenden Erfindung weist die Verbundstruktur wenigstens eine Lage eines Dielektrikums auf, wobei das Dielektrikum zwischen der elektrisch heizbaren Lage und dem Temperatursensor angeordnet ist. Die elektrisch heizbare Lage und der Temperatursensor können auf vorteilhafte Weise durch das Dielektrikum konstruktiv und funktional voneinander getrennt werden.

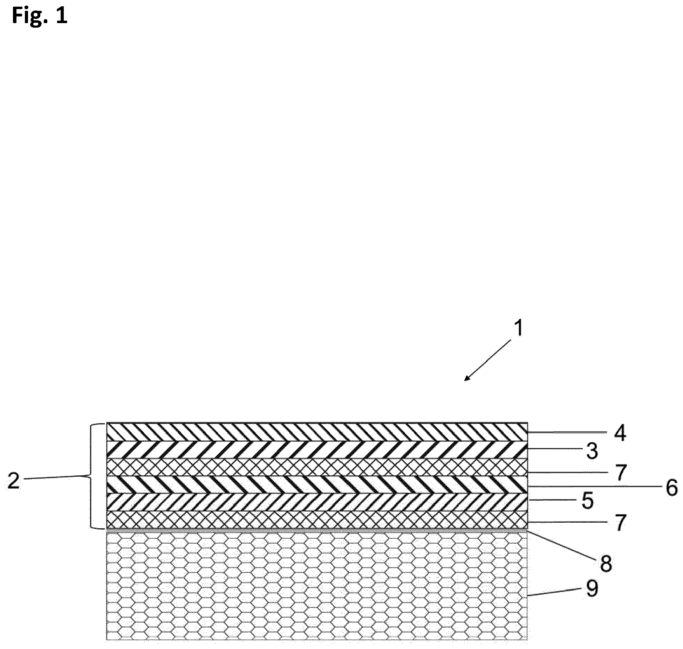

Anhand der Figur 1 wird im Folgenden ein erstes Ausführungsbeispiel der Erfindung schematisch dargestellt und näher erläutert. Fig. 1 zeigt eine schematische Darstellung einer erfindungsgemäßen Verbundstruktur in einer Schnittdarstellung.

Die dargestellte Verbundstruktur 1 weist eine Funktionsschicht 2 und eine Unterschicht 9 auf. Die Funktionsschicht 2 ist lagenweise aufgebaut, wobei die einzelnen Lagen in einem Druckverfahren aus elektrisch leitfähigen und elektrisch nicht leitfähigen Pasten aufgebaut sind. Nach dem Drucken trocknen die Pasten und bilden einen formstabilen Schichtverbund. Die Funktionsschicht 2 weist eine elektrisch heizbare Lage 3 auf, die über eine Zuleitung 4 mit Strom versorgt wird. Durch den inneren Widerstand der elektrisch leitfähigen Lage 3 ist diese bei Stromfluss beheizbar, sodass die mehrschichtige Verbundstruktur 1 als Flächenheizelement verwendet werden kann. Eine elektrisch nicht leitfähige bzw. elektrisch isolierende Lage wird aus einem Dielektrikum 7 gebildet, das die elektrisch heizbare Lage 3 von einem Temperatursensor 6 elektrisch isoliert. Eine Zuleitung 5 für den Temperatursensor 6 steht in elektrisch leitfähigen Kontakt zu dem Temperatursensor 6 und dient sowohl zur Energieversorgung des Temperatursensors 6 als auch zur Übertragung von Sensordaten des Temperatursensors 6 an eine nicht näher dargestellte Einrichtung zur Regelung der Temperatur der elektrisch heizbaren Lage 3. Die Zuleitung des Temperatursensors 5 grenzt auf der dem Temperatursensor 6 abgewandten Seite wiederum an eine weitere Lage des Dielektrikums 7 an.

Auf die Funktionsschicht 2 bzw. das an der Zuleitung des Temperatursensors 5 angrenzende Dielektrikum 7 ist die Unterschicht 9 aus Polymerschaum mit Hilfe einer zusätzlichen Haftvermittlerschicht 8 aufkaschiert. Die Unterschicht 9 dient einerseits zur thermischen Isolation des Fußbodenbelags bzw. der Verbundstruktur 1 von dem Untergrund und zur Bereitstellung einer akustischen Dämmung, sodass dem Fußbodenbelag bzw. der Verbundstruktur 1 die Funktion einer Trittschalldämmung verliehen werden kann.

### Bezugszeichenliste (Teil der Beschreibung)

- 1: Verbundstruktur
- 2: Funktionsschicht
- 3: Elektrisch heizbare Lage
- 4: Zuleitung der elektrisch heizbaren Lage
- 5: Zuleitung des Temperatursensors
- 6: Temperatursensor
- 7: Dielektrikum
- 8: Haftvermittler
- 9: Unterschicht

## Patentansprüche

1. Fußbodenbelag, vorzugsweise Trittschalldämmung, aufweisend eine Verbundstruktur (1) mit wenigstens einer elektrisch heizbaren Lage (3) und eine Unterschicht (9) mit einem Polymerschaum,
**dadurch gekennzeichnet, dass**
die Verbundstruktur (1) mit einer Einrichtung zur Regelung der Temperatur der elektrisch heizbaren Lage (3) verbindbar ist.

2. Fußbodenbelag nach Anspruch 1,
**dadurch gekennzeichnet, dass**
die elektrisch heizbare Lage (3) als eine gedruckte und aushärtend getrocknete elektrisch leitfähige Struktur ausgebildet ist.

3. Fußbodenbelag nach einem der vorhergehenden Ansprüche,
**dadurch gekennzeichnet, dass**
die Verbundstruktur (1) wenigstens einen Temperatursensor (6) aufweist, wobei der Temperatursensor (6) mit der Einrichtung zur Regelung der Temperatur der elektrisch heizbaren Lage (3) verbindbar ist.

4. Fußbodenbelag nach einem der vorhergehenden Ansprüche,
**dadurch gekennzeichnet, dass**
die Verbundstruktur (1) wenigstens eine Zuleitung der elektrisch heizbaren Lage (4) und/oder eine Zuleitung des Temperatursensors (5) aufweist.

5. Fußbodenbelag nach Anspruch 4,
**dadurch gekennzeichnet, dass**
die Zuleitung der elektrisch heizbaren Lage (4) und/oder die Zuleitung des Temperatursensors (5) als eine gedruckte und aushärtend getrocknete elektrisch leitfähige Struktur aus mindestens einer elektrisch leitfähigen Paste ausgebildet ist.

6. Fußbodenbelag nach einem der vorhergehenden Ansprüche,
**dadurch gekennzeichnet, dass**
der Temperatursensor (6) als eine gedruckte und aushärtend getrocknete elektrisch leitfähige Struktur ausgebildet ist.

7. Fußbodenbelag nach einem der vorhergehenden Ansprüche,
**dadurch gekennzeichnet, dass**
die Verbundstruktur (1) wenigstens eine Lage eines Dielektrikums (7) aufweist, wobei das Dielektrikum (7) zwischen der elektrisch heizbaren Lage (3) und dem Temperatursensor (6) angeordnet ist.
